# EUROPÄISCHE PATENTANMELDUNG

(11) **EP 4 299 159 A1**
(43) Veröffentlichungstag der Anmeldung: **03.01.2024**
(21) Anmeldenummer: 22181260.5
(22) Anmeldetag: 27.06.2022
(51) Int. Cl.: B01D 53/04, G01N 31/12

(54) **ADSORPTIONSVORRICHTUNG ZUR ADSORPTION VON CO2, ELEMENTARANALYSEGERÄT UND VERFAHREN ZUM ENTFERNEN VON CO2 AUS EINEM FLUIDSTROM**

(71) Anmelder: C. Gerhardt GmbH & Co. KG, 53639 Königswinter (DE)
(72) Erfinder: JEUB, Uwe, 53639 Königswinter (DE); ADAMEK, Tatjana, 53639 Königswinter (DE); NÜLLE, Nadine, 53639 Königswinter (DE)
(74) Vertreter: Grünecker Patent- und Rechtsanwälte PartG mbB

(57) **Zusammenfassung**

Die Erfindung betrifft eine Adsorptionsvorrichtung zur Adsorption von CO₂ für ein Elementaranalysegerät umfasst einen Filter mit einem Einlass für ein Fluid, einem Auslass für das Fluid und einem adsorbierenden Material, das von dem Fluid durchströmt werden kann, und eine Heizvorrichtung zum Erwärmen des adsorbierenden Materials. Die Adsorptionsvorrichtung ist dadurch gekennzeichnet, dass sich die Heizvorrichtung entlang einer Längsachse erstreckt und der Filter koaxial zu der Längsachse angeordnet ist und die Heizvorrichtung zumindest teilweise radial umschließt. Die Erfindung betrifft außerdem ein Elementaranalysegerät umfassend einen Verbrennungsreaktor zum Verbrennen einer Probe, einen optionalen Reduktionsreaktor, einen optionalen Wasserabscheider und einen Detektor. Das Elementaranalysegerät ist dadurch gekennzeichnet, dass es die Adsorptionsvorrichtung zur Adsorption von CO₂ und eine Ventilsteuerung umfasst, mit der abwechselnd ein Analysefluid aus dem Verbrennungsreaktor durch die Adsorptionsvorrichtung zur Adsorption von CO₂ und zum Detektor bzw. ein Spülfluid durch die Adsorptionsvorrichtung zur Adsorption von CO₂ geleitet werden kann. Die Erfindung betrifft ferner ein Verfahren zum Entfernen von CO2 aus einem Fluidstrom mittels der Adsorptionsvorrichtung zur Adsorption von CO₂.

## Beschreibung

Die Erfindung betrifft eine Adsorptionsvorrichtung zur Adsorption von CO₂, ein Elementaranalysegerät umfassend die Adsorptionsvorrichtung und ein Verfahren zum Entfernen von CO₂ aus einem Fluidstrom, insbesondere einem Gasstrom.

### Technischer Hintergrund

Die Erfindung betrifft das Gebiet der Elementaranalysegeräte. Elementaranalysegeräte werden eingesetzt, um den Anteil bestimmter chemischer Elemente in einer Probe zu bestimmen. Derartige Geräte werden beispielsweise eingesetzt, um den Stickstoffanteil in organischen Proben, insbesondere in Lebensmittelproben zu bestimmen. Mittels des Stickstoffgehalts können beispielsweise Rückschlüsse auf den Proteingehalt einer Lebensmittelprobe gezogen werden.

Bei der Elementaranalyse von organischen Proben werden die organischen Proben zunächst durch Verbrennung in ihre elementaren Gasbestandteile zerlegt. Dabei entstehen Verbrennungsgase die, abhängig von der Probe, unterschiedliche Zusammensetzungen von Gasstoffkombinationen aufweisen. Hauptsächlich sind hier COₓ, Wasserdampf, elementarer Stickstoff und Stickoxide vorhanden. Um die COₓ- und NOₓ-Kombinationen aufzubrechen und zu einfacher handhabbaren Kombinationen reagieren zu lassen wird das Verbrennungsgas (auch Probengas genannt) erst durch einen Katalysator und dann in einem zweiten Schritt üblicherweise durch einen Reduktionsreaktor geleitet. Anschließend wird üblicherweise das Wasser mittels einer oder mehrerer Wasserfallen aus dem Probegasstrom entfernt. In einem weiteren Schritt wird CO₂ mittels Adsorptionsvorrichtung zur Adsorption von CO₂ aus dem Probegasstrom entfernt. Der somit erhaltene Probegasstrom enthält im Wesentlichen nur noch elementaren Stickstoff, dessen Konzentration im Probegasstrom in einem abschließenden Schritt mittels eines Detektors, üblicherweise mittels eines Wärmeleitfähigkeitsdetektors, bestimmt werden kann.

Die bekannten Adsorptionsvorrichtungen enthalten ein adsorbierendes Material, welches CO₂ aus dem Probengasstrom bindet. Als adsorbierendes Material werden beispielsweise natürliche und synthetische Zeolithe verwendet, die auch als Molekularsiebe bezeichnet werden. CO₂ wird bei Raumtemperatur auf der Oberfläche des adsorbierenden Materials gebunden. Sobald das adsorbierende Material vollständig mit CO₂ beladen ist, muss es vor einer weiteren Verwendung zunächst regeneriert werden. Die Regeneration erfolgt durch Erwärmen des adsorbierenden Materials, vorzugsweise auf Temperaturen über 220°C. Bei erhöhter Temperatur gibt das adsorbierende Material das gebundene CO₂ ab. Zur vollständigen Entfernung des CO₂ wird zusätzlich ein Spülgasstrom durch das adsorbierende Material geleitet. Nach erfolgter Regeneration wird das adsorbierende Material abgekühlt und kann erneut beladen werden.

Die Patentschrift EP 2 013 615 B1 offenbart eine Adsorptionsvorrichtung zur Adsorption von CO₂ mit einem Filter, der ein adsorbierendes Material aufweist, und einer Heizvorrichtung zum Erwärmen des adsorbierenden Materials. Der Filter wird durch ein U-förmiges Rohr gebildet, in dessen Innern das adsorbierende Material angeordnet ist. Die Heizvorrichtung besteht aus einem Heizdraht, der spiralförmig um die Außenseite des U-förmigen Rohres gewunden ist. Somit kann das adsorbierende Material zur Regeneration von außen mittels der Heizvorrichtung erwärmt werden. Die Adsorptionsvorrichtung umfasst zusätzlich eine Ventilvorrichtung, mit der abwechselnd ein Probegasstrom und ein Spülgasstrom durch den Filter geleitet werden können, wobei der Spülgasstrom in der entgegengesetzten Richtung zum Probegasstrom durch den Filter geleitet wird.

### Aufgabe der Erfindung

Es ist Aufgabe der vorliegenden Erfindung, eine verbesserte Adsorptionsvorrichtung zur Adsorption von CO₂ bereitzustellen, mit der insbesondere die Regeneration des adsorbierenden Materials effektiver und effizienter erfolgen kann. Das bedeutet, dass gebundenes CO₂ möglichst vollständig und unter minimalem Energie- und Zeitaufwand aus dem adsorbierenden Material ausgespült werden kann. Zudem soll die Adsorptionsvorrichtung eine vollständige Adsorption von CO₂ aus einem Probegasstrom ermöglichen. Schließlich soll die Adsorptionsvorrichtung einfach und kostengünstig herzustellen und zu warten sein.

### Beschreibung der Erfindung

Zur Lösung dieser Aufgabe offenbart die Erfindung eine Adsorptionsvorrichtung zur Adsorption von CO₂ für ein Elementaranalysegerät, ein Elementaranalysegerät und ein Verfahren zum Entfernen von CO₂ aus einem Fluidstrom.

### Adsorptionsvorrichtung

Die erfindungsgemäße Adsorptionsvorrichtung zur Adsorption von CO₂ für ein Elementaranalysegerät umfasst einen Filter mit einem Einlass für ein Fluid, einem Auslass für das Fluid und einem adsorbierenden Material, das von dem Fluid durchströmt werden kann, und eine Heizvorrichtung zum Erwärmen des adsorbierenden Materials. Die Adsorptionsvorrichtung ist dadurch gekennzeichnet, dass sich die Heizvorrichtung entlang einer Längsachse erstreckt und der Filter koaxial zu der Längsachse angeordnet ist und die Heizvorrichtung zumindest teilweise radial umschließt.

Dadurch, dass der Filter und damit auch das in dem Filter vorhandene adsorbierende Material die Heizvorrichtung zumindest teilweise radial umschließen, wird die von der Heizvorrichtung radial nach Außen abgegebene Wärme und somit die Heizleistung besser genutzt. Dies unterscheidet die erfindungsgemäße Adsorptionsvorrichtung von der in EP 2 013 615 B1 offenbarten Adsorptionsvorrichtung, bei der die Heizvorrichtung auf der radialen Außenseite des Filters angeordnet ist, so dass die radial nach Außen abgegebene Wärme nicht zum Erwärmen des adsorbierenden Materials genutzt werden kann.

Die erfindungsgemäße Adsorptionsvorrichtung erzielt darüber hinaus eine äußerst homogene Wärmeverteilung innerhalb des adsorbierenden Materials. Dadurch wird die Regenerationsleistung verbessert. Die Regeneration des adsorbierenden Materials erfolgt bei der erfindungsgemäßen Adsorptionsvorrichtung schnell und vollständig.

Die Konstruktionsweise der erfindungsgemäßen Adsorptionsvorrichtung erleichtert außerdem die Montage und Wartung der Heizvorrichtung und des Filters. Die Heizvorrichtung kann beispielsweise in eine entsprechende axiale Aufnahme des Filters eingesteckt und auf diesem Wege wieder von dem Filter getrennt werden. In der Adsorptionsvorrichtung gemäß EP 2 013 615 B1 besteht die Heizvorrichtung hingegen aus einem Heizdraht, der spiralförmig um ein U-förmiges Rohr gewunden ist, so dass die Heizvorrichtung nur mit großem Aufwand von dem Filter getrennt werden kann.

Mit den Begriffen "Einlass" und "Auslass" werden die Öffnungen des Filters bezeichnet, durch die das Fluid in den Filter hinein bzw. aus dem Filter herausströmen kann. Im Rahmen der vorliegenden Beschreibung soll mit diesen Begriffen, soweit nicht ausdrücklich angegeben, keine Einschränkung hinsichtlich der Strömungsrichtung verbunden sein. So ist es auch möglich, beim Betrieb der Adsorptionsvorrichtung das Fluid von der als "Auslass" bezeichneten Öffnung zu der als "Einlass" bezeichneten Öffnung zu leiten und umgekehrt.

Der Filter umschließt die Heizvorrichtung in radialer Richtung zumindest teilweise, wobei die radiale Richtung in Bezug auf die Längsachse definiert wird. Dabei ist nicht unbedingt erforderlich, dass der Filter die radiale Oberfläche der Heizvorrichtung vollständig verdeckt, sondern es ist auch möglich, dass der Filter Lücken lässt, in denen beispielsweise Luft zwischen der radialen Außenseite des Filters und der radialen Oberfläche der Heizvorrichtung zirkulieren kann.

Der Filter kann die Heizvorrichtung in radialer Richtung teilweise oder vollständig umschließen. Vorzugsweise deckt der Filter in einer Projektionsebene senkrecht zur Längsachse einen Winkelbereich von mindestens 45°, besonders bevorzugt mindestens 90°, weiter bevorzugt mindestens 180° ab. Dabei wird eine Projektionsebene betrachtet, das heißt, dass der Querschnitt des Filters auf eine Ebene senkrecht zur Längsachse projiziert wird, um den Grad der radialen Umschließung zu ermitteln. Am meisten bevorzugt deckt der Filter einen Winkelbereich von 360° ab, das heißt, er umschließt die Heizvorrichtung vollständig.

Die Heizvorrichtung erstreckt sich vorzugsweise einer geraden Längsachse und ist beispielsweise stabförmig. Die gerade Längsachse ist in diesem Fall gleichzeitig die Längsachse der Heizvorrichtung. Diese Ausführungsform hat den Vorteil, dass eine stabförmige Längsachse leicht in eine entsprechende Aufnahme im Filter gesteckt und wieder herausgezogen werden kann.

Es ist aber auch möglich, dass die Heizvorrichtung die Form eines gekrümmten Stabs aufweist. Beispielsweise kann die Heizvorrichtung U-förmig sein. Ein derartig gekrümmter Stab hat eine gekrümmte Längsachse. In diesem Fall ist die Längsachse, entlang derer sich die Heizvorrichtung erstreckt, gekrümmt und die Form des Filters folgt der Krümmung der Längsachse.

In einer Ausführungsform ist der Filter entlang der Längsrichtung spiralförmig um die Heizvorrichtung herum angeordnet. Der spiralförmige Filter umschließt einen axialen Hohlraum, in dem die Heizvorrichtung angeordnet ist. Bei dieser Ausführungsform umschließt der Filter die Heizvorrichtung in radialer Richtung vollständig. Bei dieser Ausführungsform bestehen zwischen den Windungen des spiralförmigen Filters Lücken, durch die Luft zwischen der radialen Außenseite des Filters und der Oberfläche der Heizvorrichtung zirkulieren kann. Damit ist es möglich, die für den Wärmeaustausch zur Verfügung stehende Oberfläche des Filters im Verhältnis zur eingesetzten Menge des adsorbierenden Materials zu vergrößern. Dies begünstigt die Aufnahme der von der Heizvorrichtung abgegebenen Heizwärme und ermöglicht einen homogene Temperaturverteilung innerhalb des adsorbierenden Materials. Außerdem ermöglicht diese Ausführungsform ein schnelleres Abkühlen des adsorbierenden Materials nach erfolgter Regeneration.

Der Filter hat in dieser Ausführungsform vorzugsweise die Form eines spiralförmigen Rohres, an dessen Enden jeweils der Einlass und der Auslass angeordnet sind. Vorzugsweise sind der Einlass und der Auslass somit in Bezug auf die Längsachse an entgegengesetzten Enden des Filters angeordnet.

Das Rohr stellt einen Behälter zur Aufnahme des adsorbierenden Materials dar. Das Rohr kann beispielsweise aus Glas, Edelstahl oder Kunststoff hergestellt sein, wobei Glas das am meiste bevorzugte Material darstellt. Bei Kunststoff ist darauf zu achten, ein hitzebeständiges Material zu wählen bzw. die Temperatur für die Regeneration des adsorbierenden Materials entsprechend zu senken. Das spiralförmige Rohr ist so weit mit dem adsorbierenden Material gefüllt, dass das Material von der Heizvorrichtung erwärmt werden kann, wobei es nicht erforderlich ist, das Rohr vollständig mit dem adsorbierenden Material zu füllen. Im Falle einer gekrümmten Heizvorrichtung, beispielsweise einer Heizvorrichtung in Form eines U-förmigen Stabs, ist auch der spiralförmige Filter gekrümmt und folgt der Krümmung der Heizvorrichtung.

Der Durchmesser des Rohres beträgt vorzugsweise 5 mm bis 50 mm, besonders bevorzugt 6 mm bis 15 mm. Mit diesem Durchmesser wird eine optimale Wärmeverteilung innerhalb des adsorbierenden Materials erzielt.

Vorzugsweise ist die Heizvorrichtung in dieser Ausführungsform stabförmig, so dass die Längsachse eine gerade Linie darstellt. Auf diese Weise ist es möglich, die Heizvorrichtung in den axialen Hohlraum des spiralförmigen Filters einzustecken. Dies erleichtert die Montage der gesamten Adsorptionsvorrichtung. Die Adsorptionsvorrichtung kann auf entsprechende Weise einfach demontiert werden, in dem die Heizvorrichtung einfach aus dem spiralförmigen Filter herausgezogen wird. Dies erleichtert die Wartung der gesamten Adsorptionsvorrichtung.

In einer weiteren Ausführungsform umfasst der Filter eine erste Kammer, wobei das adsorbierende Material in der ersten Kammer angeordnet ist. In dieser Ausführungsform umgibt die erste Kammer einen Hohlraum, der sich entlang der Längsachse erstreckt. Die Heizvorrichtung ist in dem Hohlraum angeordnet. Bei dieser Ausführungsform umschließt der Filter die Heizvorrichtung in radialer Richtung vollständig.

Bei dieser Ausführungsform ist es möglich aber nicht zwingend erforderlich, dass der Filter die radiale Oberfläche der Heizvorrichtung vollflächig verdeckt. Damit ist gemeint, dass der Filter keine Lücken lässt, durch die Luft in radialer Richtung zirkulieren kann. Die in radialer Richtung abgestrahlte Heizwärme wird damit nahezu vollständig von dem Filter aufgenommen und steht somit zur Erwärmung des adsorbierenden Materials zur Verfügung. Auf diese Weise kann die Energieeffizienz der Adsorptionsvorrichtung gesteigert werden.

In einer Variante dieser Ausführungsform weist der Filter nur die erste Kammer auf, in der das adsorbierende Material angeordnet ist. Diese Kammer erstreckt sich vorzugsweise entlang der Längssachse. Die Kammer umgibt den axialen Hohlraum, in dem die Heizvorrichtung angeordnet ist. Vorzugsweise sind bei dieser Variante der Einlass und der Auslass in Bezug auf die Längsachse an entgegengesetzten Enden der Kammer angeordnet, so dass das Fluid das adsorbierende Material in einer Richtung durchströmen kann.

In einer weiteren Variante weist der Filter neben der ersten Kammer eine zweite Kammer auf, die fluidisch mit der ersten Kammer verbunden ist. Die zweite Kammer umgibt den axialen Hohlraum, in dem die Heizvorrichtung angeordnet ist, und ist in radialer Richtung zwischen der ersten Kammer und dem Hohlraum angeordnet. Vorzugsweise sind somit sowohl die erste als auch die zweite Kammer koaxial zur Längsachse angeordnet und umgeben beide den axialen Hohlraum, wobei die zweite Kammer in radialer Richtung innen und die erste Kammer in radialer Richtung außen angeordnet ist.

In dieser Ausführungsform kann das adsorbierende Material entweder in der äußeren, ersten Kammer oder der inneren, zweiten Kammer oder in beiden Kammern angeordnet sein. In einer bevorzugten Ausführungsform ist das adsorbierende Material nur in der äußeren, ersten Kammer angeordnet.

In dieser Ausführungsform ist der Einlass mit einer der beiden Kammern und der Auslass mit der anderen der beiden Kammern verbunden. Beispielsweise ist der Einlass mit der äußeren, ersten Kammer und der Auslass mit der inneren, zweiten Kammer verbunden oder der Einlass ist mit der inneren, zweiten Kammer und der Auslass mit der äußeren, ersten Kammer verbunden. Einlass und Auslass befinden sich hierbei vorzugsweise in Bezug auf die Längsachse an demselben Ende des Filters. Die fluidische Verbindung zwischen der ersten und der zweiten Kammer befindet sich in Bezug auf die Längsachse vorzugsweise an dem entgegengesetzten Ende des Filters. So ist es möglich, dass der Fluidstrom zunächst die eine Kammer in einer Richtung durchströmt und anschließend die andere Kammer in der entgegengesetzten Richtung durchströmt.

In einer bevorzugten Ausführungsform ist das adsorbierende Material nur in der äußeren, ersten Kammer angeordnet und Einlass und Auslass des Filters sind so angeordnet, dass der Fluidstrom zunächst die innere, zweite Kammer durchströmt und erst danach die äußere, erste Kammer durchströmt. Auf diese Weisung wird der Fluidstrom zunächst in der inneren, zweiten Kammer, die näher an der Heizvorrichtung liegt, durch die Heizvorrichtung erwärmt. Anschließend durchströmt der erwärmte Fluidstrom die äußere, erste Kammer, wobei er das adsorbierende Material erwärmt. Damit wird mit Hilfe des Fluidstroms eine homogene Temperaturverteilung in dem adsorbierenden Material erzeugt.

In einer bevorzugten Ausführungsform aller Filtervarianten umfasst die Adsorptionsvorrichtung zusätzlich eine Kühlvorrichtung zum Kühlen des adsorbierenden Materials. Mit Hilfe der Kühlvorrichtung ist es möglich, das adsorbierende Material nach erfolgter Regeneration innerhalb kurzer Zeit wieder auf die zur Adsorption von CO₂ erforderliche Temperatur abzukühlen und somit betriebsbereit zu stellen.

Die Kühlvorrichtung ist vorzugsweise ein Ventilator. Der Ventilator bläst Luft in Richtung des Filters, so dass das adsorbierende Material im Filter abgekühlt wird. Die zum Kühlen verwendete Luft weist vorzugsweise Raumtemperatur auf. Der Ventilator kann allerdings auch mit einem zusätzlichen Kühlaggregat, beispielsweise einer Wasserkühlung, und einem Wärmetauscher ausgestattet sein, so dass die zum Kühlen eingesetzte Luft auf Temperaturen unterhalb der Raumtemperatur gekühlt werden kann. Vorzugsweise sind der Ventilator und der Filter so angeordnet, dass die Luft in Bezug auf die Längsachse in radialer Richtung auf den Filter geleitet wird.

Die Verwendung eines Ventilators ist besonders bevorzugt in Kombination mit dem oben beschriebenen spiralförmigen Filter, da die zum Kühlen verwendete Luft zwischen den Windungen des spiralförmigen Filters zirkulieren kann. Dies verbessert den Wärmeaustausch zwischen der zum Kühlen verwendeten Luft und dem Filter und sorgt für eine schnellere Abkühlung des adsorbierenden Materials. Dieser Effekt ist besonders ausgeprägt, wenn die zum Kühlen verwendete Luft in radialer Richtung auf den Filter geleitet wird.

Vorzugsweise wird die zum Kühlen verwendete Luft vom Ventilator aus durch einen Strömungskanal auf den Filter geleitet. Der Strömungskanal muss nicht notwendigerweise geradlinig verlaufen, sondern kann so ausgebildet sein, dass die zum Kühlen verwendete Luft um eine oder mehrere Ecken geführt wird. So ist es beispielsweise möglich, den Ventilator in axialer Richtung ober- oder unterhalb des Filters anzuordnen, so dass die zum Kühlen verwendete Luft zunächst in einer Richtung parallel zur Längsachse aus dem Ventilator austritt. Anschließend wird die zum Kühlen verwendete Luft durch den Strömungskanal umgelenkt und trifft aus radialer Richtung auf den Filter.

Der Strömungskanal wird vorzugsweise durch ein Gehäuse gebildet, welches den Filter und die Heizvorrichtung zumindest teilweise umschließt. Die Kühlvorrichtung kann ebenfalls zumindest teilweise von dem Gehäuse umschlossen werden oder außerhalb von dem Gehäuse angeordnet sein. Vorzugsweise umfasst das Gehäuse mehrere innen liegende, lamellenförmige Wände, durch die ein oder mehrere Strömungskanäle gebildet werden.

Die Heizvorrichtung zum Erwärmen des adsorbierenden Materials ist vorzugsweise eine elektrische Heizvorrichtung. Die Verwendung einer elektrischen Heizvorrichtung hat den Vorteil, dass diese schnell aufgewärmt und abgekühlt werden kann. Dies ermöglicht kürzere Zykluszeiten bei der Regeneration des adsorbierenden Materials.

In einer Ausführungsform ist die Heizvorrichtung durch einen elektrischen Heizdraht gebildet, der spiralförmig um eine stabförmige Basis angeordnet ist. Ein spiralförmiger Heizdraht ermöglicht eine gleichmäßige Abgabe der Heizwärme an das adsorbierende Material.

Wie oben erwähnt, kann die Heizvorrichtung stabförmig sein, sodass die Längsachse entweder eine gerade Linie darstellt, oder die Heizvorrichtung kann die Form eines gekrümmten Stabes aufweisen, sodass die Längsachse ebenfalls gekrümmt ist. Dementsprechend kann die stabförmige Basis gerade sein oder eine gekrümmte Form aufweisen. Im Fall einer gekrümmten stabförmigen Basis folgt auch die Spirale des Heizdrahtes der Krümmung der stabförmigen Basis. Die Verwendung einer geraden, stabförmigen Basis ist jedoch bevorzugt.

Die stabförmige Basis ist vorzugsweise aus einem elektrisch nicht leitfähigen Material gebildet. Es ist auch möglich, dass die stabförmige Basis zumindest über eine elektrisch nicht leitfähige Oberfläche verfügt. Die stabförmige Basis ist vorzugsweise rohrförmig und wird besonders bevorzugt durch ein Glimmerrohr gebildet.

Die Verwendung einer rohrförmigen, stabförmigen Basis hat den Vorteil, dass innerhalb der stabförmigen Basis weitere Funktionselemente angeordnet werden können. In einer bevorzugten Ausführungsform ist innerhalb der stabförmigen Basis ein Temperatursensor angeordnet, der zur Steuerung der Heizvorrichtung dient.

In einer bevorzugten Ausführungsform umfasst die Adsorptionsvorrichtung eine erste Ventileinheit, die mit dem Einlass verbunden ist. Mittels dieser Einheit können ein erstes und ein zweites Fluid wechselweise in den Filter geleitet werden. Die Ventileinheit umfasst vorzugsweise mindestens zwei Ventile. Dies ermöglicht es, über ein Ventil ein Analysefluid und über ein anderes Ventil ein Spülfluid in den Filter zu leiten.

In einer weiteren Ausführungsform verfügt die Adsorptionsvorrichtung zusätzlich über eine zweite Ventileinheit, die mit dem Auslass verbunden ist und mit der das Fluid aus dem Filter wechselweise zu verschiedenen Abnehmern weitergeleitet werden kann. Damit ist es beispielsweise möglich, dass Fluid aus dem Filter wechselweise zu einem stromabwärts gelegenen Detektor oder zu einem weiteren Auslass zu leiten.

Mittels der ersten und der zweiten Ventileinheit ist es möglich, wechselweise ein Analysefluid durch den Filter zu leiten, welches anschließend an einen stromabwärts gelegenen Detektor weitergeleitet wird, oder ein Spülfluid durch den Filter zu leiten, welches anschließend zu einem weiteren Auslass geleitet wird. Wahlweise ist es auch möglich, das Spülfluid ebenfalls an den Detektor weiterzuleiten, um beispielsweise die Menge an gebundenem CO₂ zu bestimmen.

Es ist dabei nicht erforderlich, dass das Analysefluid und das Spülfluid den Filter jeweils in der gleichen Richtung durchströmen. Es ist auch möglich, dass das Spülfluid in entgegengesetzter Richtung zu dem Analysefluid durch den Filter geleitet wird. In diesem Fall kann das Spülfluid über den Auslass der Adsorptionsvorrichtung in den Filter geleitet werden und über den Einlass der Adsorptionsvorrichtung aus dem Filter herausgeleitet werden, während das Analysefluid über den Einlass der Adsorptionsvorrichtung in den Filter hineingeleitet wird und über den Auslass der Adsorptionsvorrichtung weiter an den Detektor geleitet wird. Es ist jedoch ebenso möglich, dass sowohl das Analysefluid als auch das Spülfluid über den Einlass in die Adsorptionsvorrichtung eingeleitet und über den Auslass aus der Adsorptionsvorrichtung ausgeleitet werden und somit den Filter in der gleichen Richtung durchlaufen.

In einer weiteren Ausführungsform weisen der Einlass und der Auslass des Filters jeweils ein Anschlusselement auf, mit welchem der Einlass und der Auslass jeweils mit einem Ventil oder einer Ventileinheit fluiddicht verbunden werden können. Die jeweiligen Ventile bzw. Ventileinheiten sind bei dieser Ausführungsform selbst nicht Teil der Adsorptionsvorrichtung. Vorzugsweise ermöglichen die beiden Anschlusselemente eine lösbare Verbindung mit den jeweiligen Ventilen bzw. Ventileinheiten. Auf diese Weise ist es möglich, die Adsorptionsvorrichtung auf einfache Art und Weise an eine außerhalb der Adsorptionsvorrichtung bereitgestellte Ventilanlage anzuschließen. Die Adsorptionsvorrichtung kann somit in Form eines Moduls hergestellt werden, welches auf einfache Art und Weise in ein bestehendes Elementaranalysegerät integriert werden kann.

Als adsorbierendes Material kann jedes Material verwendet werden, welches CO₂ aus dem Fluidstrom adsorbieren kann. Vorzugsweise wird als adsorbierendes Material ein Molekularsieb eingesetzt. Besonders bevorzugt besteht das adsorbierende Material aus natürlichen oder synthetischen Zeolithen. Zur Verbesserung der Adsorptionseigenschaften kann das adsorbierende Material auch beschichtet sein. Das adsorbierende Material hat vorzugsweise die Form eines Granulats. Die mittlere Korngröße des Granulats wird vorzugsweise so klein wie möglich gewählt, um die spezifische Oberfläche des adsorbierenden Materials zu maximieren. Eine zu geringe Korngröße hat jedoch negativen Einfluss auf die Lebensdauer des adsorbierenden Materials. Vorzugsweise liegt die Korngröße des adsorbierenden Materials im Bereich von 1 mm bis 3 mm. Die Messgröße der Zeolith-Struktur liegt vorzugsweise im Bereich von 8 µm bis 15 µm. In diesem Korngrößenbereich wird ein besonders vorteilhaftes Verhältnis von Adsorptionsfähigkeit zu Lebensdauer erzielt.

Neben dem adsorbierenden Material zur Adsorption von CO₂ kann der Filter weitere adsorbierende Materialien, insbesondere zur Adsorption von Wasser und schwefelhaltigen Verbindungen, insbesondere SO₂, umfassen. Diese sind vorzugsweise stromaufwärts bezogen auf die Strömungsrichtung des Analysefluids von dem adsorbierenden Material zur Adsorption von CO₂ angeordnet. Mittels dieser zusätzlichen adsorbierenden Materialien können Verunreinigungen aus dem Analysefluid entfernt werden, die andernfalls zu einer Schädigung des adsorbierenden Materials zur Adsorption von CO₂ führen würden. Zur Adsorption von Wasser können beispielsweise Kieselgel (Silikagel) oder Aluminiumoxid eingesetzt werden. Zur Adsorption von schwefelhaltigen Verbindungen, insbesondere SO₂, können beispielsweise Kieselgel (Silikagel) oder Aktivkohle eingesetzt werden.

Die Adsorptionsvorrichtung ist vorzugsweise zum Einsatz in einem Elementaranalysegerät bestimmt, bevorzugt zum Einsatz in einem Elementaranalysegerät zur Analyse organischer Proben, besonders bevorzugt zum Einsatz in einem Elementaranalysegerät zur Analyse von Lebensmittelproben, am meisten bevorzugt zum Einsatz in einem Elementaranalysegerät zur Bestimmung des Stickstoffgehalts in einer Lebensmittelprobe. Die Adsorptionsvorrichtung eignet sich jedoch auch für beliebige andere Anwendungen, bei denen CO₂ aus einem Fluid entfernt werden muss.

Die Adsorptionsvorrichtung ist für die Adsorption von CO₂ aus einem beliebigen Fluid bestimmt. Das Fluid kann flüssige und gasförmige Bestandteile aufweisen. Darüber hinaus kann das Fluid auch Feststoffpartikel, beispielsweise Rußpartikel enthalten, so lange die Partikelgröße und Menge der Feststoffpartikel nicht zu einer Beeinträchtigung des adsorbierenden Materials führen. Vorzugsweise handelt es sich bei dem Fluid um ein Gas bzw. ein gasförmiges Gemisch, besonders bevorzugt um ein gasförmiges Gemisch, dass gegebenenfalls Wasserdampf enthält. Besonders bevorzugt umfasst das Fluid nur gasförmige Bestandteile.

### Elementaranalysegerät

Das erfindungsmäße Elementaranalysegerät umfasst einen Verbrennungsreaktor zum Verbrennen einer Probe, einen optionalen Reduktionsreaktor, einen optionalen Wasserabscheider und einen Detektor. Das Elementaranalysegerät ist dadurch gekennzeichnet, dass es die oben beschriebene Adsorptionsvorrichtung zur Adsorption von CO₂ und eine Ventilsteuerung umfasst, mit der abwechselnd ein Analysefluid aus dem Verbrennungsreaktor durch die Adsorptionsvorrichtung und zum Detektor bzw. ein Spülfluid durch die Adsorptionsvorrichtung geleitet werden kann.

In einer bevorzugten Ausführungsform handelt es sich bei dem Elementaranalysegerät um ein Gerät zur Analyse von organischen Proben, insbesondere Lebensmittelproben. Bei der Lebensmittelprobe kann es sich beispielsweise um Lebensmittel für den menschlichen Verzehr oder um Futtermittel für den tierischen Verzehr handeln. Vorzugsweise dient das Elementaranalysegerät zur Bestimmung des Stickstoffanteils in einer Probe. Besonders bevorzugt handelt es sich um ein Analysegerät zur Bestimmung des Stickstoffanteils in einer Lebensmittelprobe.

Der Reduktionsreaktor ist vorzugsweise stromabwärts von dem Verbrennungsreaktor und stromaufwärts von der Adsorptionsvorrichtung angeordnet. Als Reduktionsreaktor wird vorzugsweise ein Kupferreaktor eingesetzt, wobei Kupfer als Katalysator für die Reduktionsreaktion dient. Optional kann auch ein weiterer Katalysator eingesetzt werden, der in oder vor dem Reduktionsreaktor angeordnet ist. Mittels des Reduktionsreaktors werden die im Analysefluid vorhandenen Stickoxide, die im Verbrennungsreaktor gegebenenfalls gebildet werden, zu elementarem Stickstoff reduziert.

Der optionale Wasserabscheider ist stromabwärts von dem Verbrennungsreaktor und vorzugsweise stromabwärts von dem gegebenenfalls vorhandenen Reduktionsreaktor angeordnet. Der Wasserabscheider wird stromaufwärts von der Adsorptionsvorrichtung angeordnet. Mit dem Wasserabscheider wird das gegebenenfalls im Analysefluid vorhandene Wasser aus dem Analysefluid entfernt.

Das Elementaranalysegerät umfasst mindestens eine oben beschriebene Adsorptionsvorrichtung. Vorzugsweise umfasst das Elementaranalysegerät zwei oder mehr Adsorptionsvorrichtungen, besonders bevorzugt zwei bis zwölf Adsorptionsvorrichtungen, am meisten bevorzugt vier bis acht Adsorptionsvorrichtungen. In einer besonders bevorzugten Ausführungsform umfasst das Elementaranalysegerät sechs Adsorptionsvorrichtungen. Mit einer Vielzahl von Adsorptionsvorrichtungen ist es möglich, die Zykluszeit des Elementaranalysegerätes zu verkürzen. So kann beispielsweise zunächst eine erste Probe verbrannt werden und das dabei entstehende Analysefluid durch die erste Adsorptionsvorrichtung geleitet werden. Anschließend kann eine zweite Probe verbrannt werden und das dabei entstehende Analysefluid durch eine zweite Adsorptionsvorrichtung geleitet werden, während die erste Adsorptionsvorrichtung regeneriert wird.

Das Elementaranalysegerät umfasst eine Ventilsteuerung, mit der abwechselnd das im Verbrennungsreaktor gebildete Analysefluid und ein Spülfluid durch die Adsorptionsvorrichtung geleitet werden können. Vorzugsweise kann die Ventilsteuerung zwischen mehreren Betriebszuständen wechseln. In einem ersten Betriebszustand leitet die Ventilsteuerung beispielsweise das Analysefluid aus dem Verbrennungsreaktor durch die Adsorptionsvorrichtung und weiter zum Detektor. In einem zweiten Betriebszustand leitet die Ventilsteuerung beispielsweise ein Spülfluid durch die Adsorptionsvorrichtung und weiter zu einem Auslass für das Spülfluid. Das Spülfluid wird vorzugsweise nicht durch den Detektor geleitet. In einem dritten Betriebszustand werden beispielsweise der Einlass und der Auslass der Adsorptionsvorrichtung geschlossen, sodass Fluidverbindung zwischen der Adsorptionsvorrichtung und den restlichen Funktionseinheiten des Elementaranalysegeräts getrennt wird.

In einer Ausführungsform kann das Spülfluid ebenfalls durch den Detektor bzw. durch einen separaten Detektor zum Nachweis von CO₂ bzw. Kohlenstoff geleitet werden. Auf diese Weise ist es möglich, die Menge an gebundenem CO₂ bzw. Kohlenstoff zu bestimmen und somit Rückschlüsse auf den Kohlenstoffanteil im Analysefluid und der Probe zu ziehen.

In einer Ausführungsform umfasst das Elementaranalysegerät mindestens zwei Adsorptionsvorrichtungen und die Ventilsteuerung ist so konfiguriert, dass das Analysefluid parallel über zwei oder mehr Adsorptionsvorrichtungen geleitet wird. Auf diese Weise ist es möglich, die Adsorptionskapazität zu vervielfachen.

In einer weiteren Ausführungsform ist die Ventilsteuerung so konfiguriert, dass das Analysefluid gleichartiger Proben bei Vorhandensein mehrerer Adsorptionsvorrichtungen stets über dieselbe Adsorptionsvorrichtungen geleitet wird. Auf diese Weise ist es möglich, systematische Messfehler, die aufgrund individueller Unterschiede zwischen den Adsorptionsvorrichtungen auftreten können, zu minimieren bzw. gänzlich auszuschließen. Vorzugsweise umfasst die Ventilsteuerung zu diesem Zweck eine elektronische Speichereinheit zum Speichern von Identifikationsdaten von Proben und Adsorptionsvorrichtungen. Somit ist es möglich, Proben anhand ihrer Identifikationsdaten einer bestimmten Adsorptionsvorrichtung zuzuordnen.

Vorzugsweise umfasst das Elementaranalysegerät eine Steuereinheit zum Steuern der Ventilsteuerung und der Heizvorrichtung der Adsorptionsvorrichtung. Vorzugsweise steuert die Steuereinheit auch die gegebenenfalls vorhandene Kühlvorrichtung zum Kühlen des adsorbierenden Materials der Adsorptionsvorrichtung. Die Ventilsteuerung ist auf diese Weise mit der Heizvorrichtung gekoppelt, sodass die Heizvorrichtung vorzugsweise nur aktiviert wird, wenn kein Analysefluid durch die Adsorptionsvorrichtung geleitet wird. Zusätzlich ist die Ventilsteuerung vorzugsweise mit der gegebenenfalls vorhandenen Kühlvorrichtung zum Kühlen des adsorbierenden Materials gekoppelt, sodass die Kühlvorrichtung vorzugsweise nur dann aktiviert wird, nachdem das Spülfluid durch die Adsorptionsvorrichtung geleitet worden ist.

Das Elementaranalysegerät umfasst einen Detektor zum Nachweis mindestens eines Bestandteils des Analysefluids. Vorzugsweise handelt es sich um einen Detektor zum Nachweis gasförmiger Bestandteile des Analysefluids. Besonders bevorzugt handelt es sich um einen Detektor zum Nachweis von elementarem Stickstoff und/oder Kohlenstoff in dem Analysefluid. In einer Ausführungsform handelt es sich bei dem Detektor um einen Wärmeleitfähigkeitsdetektor. Der Detektor umfasst vorzugsweise ein Chromatographiegerät zur Auftrennung der verbleibenden Bestandteile des Analysefluids. Besonders bevorzugt handelt es sich dabei um ein Gaschromatographiegerät.

### Verfahren zum Entfernen von CO₂ aus einem Fluidstrom

Das erfindungsgemäße Verfahren zum Entfernen von CO₂ aus einem Fluidstrom umfasst die Schritte:
Bereitstellen einer oben beschriebenen Adsorptionsvorrichtung zur Adsorption von CO₂;
Durchleiten eines CO₂-haltigen Fluidstroms durch die Adsorptionsvorrichtung, so dass CO₂ aus dem Fluidstrom durch das adsorbierende Material adsorbiert wird;
Stoppen des CO₂-haltigen Fluidstroms;
Erwärmen des adsorbierenden Materials mittels der Heizvorrichtung und Durchleiten eines Spülfluidstroms durch die Adsorptionsvorrichtung, so dass adsorbiertes CO₂ aus dem adsorbierenden Material ausgespült wird; und
Stoppen des Spülfluidstroms.

Das Verfahren eignet sich zum Entfernen von CO₂ aus einem beliebigen Fluidstrom. Der Fluidstrom kann flüssige und gasförmige Bestandteile aufweisen. Darüber hinaus kann der Fluidstrom auch Feststoffpartikel, beispielsweise Rußpartikel enthalten, solange die Partikelgröße und Menge der Feststoffpartikel nicht zu einer Beeinträchtigung des adsorbierenden Materials führen. Vorzugsweise handelt es sich bei dem Fluidstrom um ein Gas oder ein gasförmiges Gemisch, besonders bevorzugt um ein gasförmiges Gemisch, dass gegebenenfalls Wasserdampf enthält. Besonders bevorzugt umfasst der Fluidstrom nur gasförmige Bestandteile.

In einer Ausführungsform handelt es sich bei dem Fluidstrom um ein Analysefluid, dass durch Verbrennung einer Probe, vorzugsweise einer organischen Probe, besonders bevorzugt einer Lebens- oder Futtermittelprobe, erhalten wird. Vorzugsweise wird der Fluidstrom durch folgende Schritte erhalten:
Verbrennen einer Probe in einem Verbrennungsreaktor, um ein Analysefluid zu erhalten; Durchleiten des Analysefluids durch einen Reduktionsreaktor, um oxidierte Bestandteile des Analysefluids zu reduzieren; Durchleiten des Analysefluids durch einen Wasserabscheider, um Wasser aus dem Analysefluid zu entfernen.

Vorzugsweise wird der CO₂-haltige Fluidstrom bei einer Temperatur von 10°C bis 40°C, vorzugsweise einer Temperatur von 15°C bis 30°C, besonders bevorzugt einer Temperatur 18°C bis 25°C durch die Adsorptionsvorrichtung geleitet, sodass CO₂ aus dem Fluidstrom durch das adsorbierende Material adsorbiert wird.

Nachdem der CO₂-haltige Fluidstrom durch die Adsorptionsvorrichtung durchgeleitet wurde, wird das adsorbierte CO₂ aus dem adsorbierenden Material ausgespült, indem das adsorbierende Material mittels der Heizvorrichtung erwärmt und ein Spülfluidstrom durch die Adsorptionsvorrichtung durchgeleitet wird. Vorzugsweise wird das adsorbierende Material dabei auf eine Kerntemperatur zwischen 100°C und 300°C, bevorzugt 150°C und 250°C, besonders bevorzugt 180°C und 220°C erwärmt. In einer besonders bevorzugten Ausführungsform wird das adsorbierende Material zunächst auf die angegebene Kerntemperatur erwärmt und anschließend der Spülfluidstrom durch die Adsorptionsvorrichtung und durch das adsorbierende Material hindurchgeleitet.

Als Spülfluid wird vorzugsweise ein Fluid eingesetzt, dass selbst keine Bestandteile enthält, die von dem adsorbierenden Material adsorbiert werden oder mit dem adsorbierenden Material chemisch reagieren. Vorzugsweise handelt es sich bei dem Spülfluid um ein Edelgas, beispielsweise Helium oder Argon. In einer bevorzugten Ausführungsform wird Helium als Spülfluid eingesetzt.

In einer bevorzugten Ausführungsform umfasst die Adsorptionsvorrichtung eine oben beschriebene Kühlvorrichtung. In diesem Fall umfasst das Verfahren den zusätzlichen Schritt des Abkühlens des adsorbierenden Materials mittels der Kühlvorrichtung, nachdem das adsorbierte CO₂ aus dem adsorbierenden Material ausgespült wurde. Beim Abkühlen des adsorbierenden Materials mittels der Kühlvorrichtung kann der Spülfluidstrom abgeschaltet sein oder weiter durch das adsorbierende Material durchgeleitet werden.

Weitere Merkmale der Erfindung werden anhand der nachfolgend beschriebenen Zeichnungen dargestellt:
- Figur 1: Perspektivische Ansicht einer Adsorptionsvorrichtung gemäß einer ersten Ausführungsform.
- Figur 2: Perspektivische Schnittansicht einer Adsorptionsvorrichtung gemäß der ersten Ausführungsform.
- Figur 3: Seitliche Schnittansicht einer Adsorptionsvorrichtung gemäß einer zweiten Ausführungsform.
- Figur 4: Perspektivische Schnittansicht einer Adsorptionsvorrichtung gemäß der zweiten Ausführungsform.

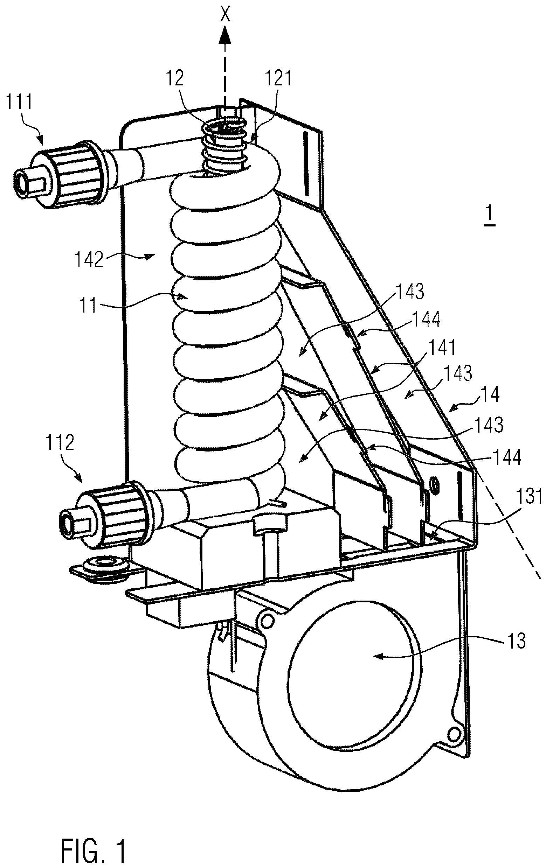

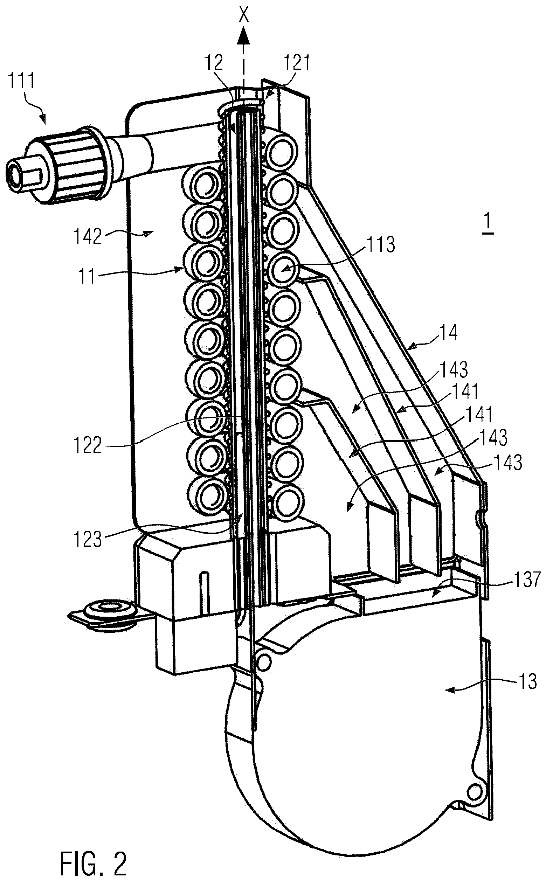

Die Figuren 1 und 2 zeigen eine erste Ausführungsform einer Adsorptionsvorrichtung 1. Die Adsorptionsvorrichtung 1 umfasst einen Filter 11, eine Heizvorrichtung 12 und eine Kühlvorrichtung 13.

Der Filter 11 hat die Form eines Rohres, dass spiralförmig um die stabförmige Heizvorrichtung 12 gewunden ist. Der Filter 11 umschließt dabei die stabförmige Heizvorrichtung 12 in radialer Richtung vollständig. An den beiden Enden des Rohres weist der Filter 11 einen Einlass 111 und einen Auslass 112 auf.

Das ist den Zeichnungen nicht selbst dargestellte adsorbierende Material ist in dem Lumen 113 des Rohres angeordnet.

Die Heizvorrichtung 12 erstreckt sich entlang einer Längsachse x. Es handelt sich um eine gerade, stabförmige Heizvorrichtung, sodass der spiralförmige Filter 11 auf einfache Art und Weise auf die stabförmige Heizvorrichtung 12 aufgesteckt werden kann. Die Heizvorrichtung 12 ist somit in dem axialen Hohlraum des spiralförmigen Filters 11 aufgenommen.

Die Heizvorrichtung 12 besteht aus einem Heizdraht 121, der spiralförmig um eine stabförmige Basis 122 gewunden ist. Die stabförmige Basis 122 besteht aus einem Rohr, bevorzugt einem Glimmerrohr, in dessen Inneren ein Temperatursensor 123 angeordnet ist. Mittels des Temperatursensors 123 kann die Temperatur der Heizvorrichtung 12 bestimmt und gesteuert werden.

Die Kühlvorrichtung 13 ist in Bezug auf die Längsachse x in axialer Richtung unterhalb der Heizvorrichtung 12 und des Filters 11 angeordnet. Es handelt sich bei der Kühlvorrichtung 13 um einen Ventilator 13. Der Ventilator 13 verfügt über eine Austrittsöffnung 131 mittels der zum Kühlen verwendete Luft in axialer Richtung in Bezug auf die Längsachse x abgegeben werden kann.

Die Adsorptionsvorrichtung 1 umfasst des Weiteren ein Gehäuse 14, in welchem die Heizvorrichtung 12 und der Filter 11 angeordnet sind. Der Ventilator 13 ist auf der Außenseite des Gehäuses 14 an das Gehäuse 14 angeschlossen. Das Gehäuse 14 umgibt die Heizvorrichtung 12 und den Filter 11 nicht vollständig, sondern ist auf der in den Figuren 1 und 2 dem Betrachter zugewandten Seite offen. Auf der Rückseite verfügt das Gehäuse 14 über eine Außenwand 142. Im Inneren des Gehäuses sind mehrere lamellenförmige Innenwände 141 ausgebildet, durch die mehrere Strömungskanäle 143 gebildet werden. Durch die Strömungskanäle 143 wird die von dem Ventilator 13 abgegebene Luft so auf den Filter 11 geleitet, dass die Luft in radialer Richtung in Bezug auf die Längsachse x auf den Filter 11 trifft.

An den Innenwänden 144 sind jeweils Verbindungsmittel 144 ausgebildet. Mit diesen Verbindungsmitteln 144 kann das Gehäuse 14 mit einer zweiten Adsorptionsvorrichtung gekoppelt werden. Dazu können die Vorsprünge 144 in entsprechende Aufnahmen in der Außenwand 142 einer zweiten Adsorptionsvorrichtung eingreifen. Auf diese Weise können mehrere Adsorptionsvorrichtungen 1 miteinander mechanisch gekoppelt werden.

Der Einlass 111 und der Auslass 112 des Filters 11 sind in der gezeigten Ausführungsform jeweils mit Anschlussmitteln ausgestattet. Mittels dieser Anschlussmittel können der Einlass 111 und der Auslass 112 jeweils fluiddicht mit einer nicht gezeigten Ventilvorrichtung verbunden werden.

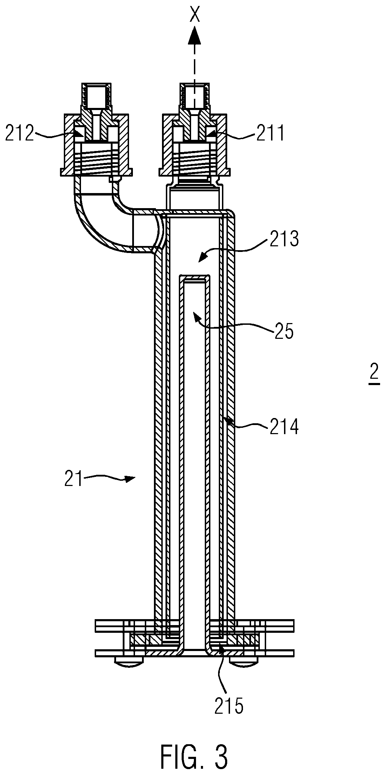

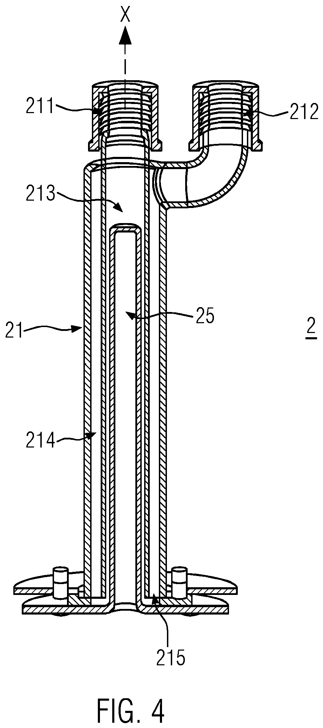

Die Figuren 3 und 4 zeigen eine weitere Adsorptionsvorrichtung 2 gemäß einer zweiten Ausführungsform.

Die Adsorptionsvorrichtung 2 verfügt über einen Filter 21 und eine in den Figuren 3 und 4 nicht einzeln dargestellte, stabförmige Heizvorrichtung. Die Heizvorrichtung kann, wie in den Figuren 1 und 2 dargestellt, eine stabförmige Basis und einen spiralförmig um die stabförmige Basis angeordneten Heizdraht umfassen.

Der Filter 21 umfasst eine äußere, erste Kammer 214 und eine innere, zweite Kammer 213. Die erste Kammer 214 und die zweite Kammer 213 umgeben einen axialen Hohlraum 25, in welchem die Heizvorrichtung angeordnet werden kann. Der Hohlraum 25 ist nach unten offen, sodass die stabförmige Heizvorrichtung in den Hohlraum 25 eingesteckt werden kann.

Die Heizvorrichtung sowie der Filter 21 erstrecken sich beide entlang einer Längsachse x. Die erste Kammer 214 und die zweite Kammer 213 sind jeweils koaxial zu dieser Längsachse x angeordnet. An dem in Bezug auf die Längsachse x oberen Ende des Filters 21 verfügt der Filter 21 über einen Einlass 211 und einen Auslass 212. Der Einlass 211 bildet die obere Öffnung der inneren, zweiten Kammer 213. Der Auslass 212 bildet die obere Öffnung der äußeren, ersten Kammer 214. Die innere, zweite Kammer 213 ist mit der äußeren, ersten Kammer 214 am unteren Ende 215 des Filters über einen Spalt fluidisch verbunden. Auf diese Weise kann ein Fluid durch den Einlass 211 und die innere, zweite Kammer 213 in die äußere, erste Kammer 214 und schließlich durch den Auslass 212 durchgeleitet werden.

Das adsorbierende Material kann in diese Ausführungsform entweder in der äußeren, ersten Kammer 214 und/oder der inneren, zweiten Kammer 213 angeordnet sein. vorzugsweise ist das adsorbierende Material in der äußeren, ersten Kammer 214 angeordnet.

Der Einlass 211 und der Auslass 212 sind in dieser Ausführungsform jeweils mit Anschlussmitteln versehen, mittels derer der Einlass 211 und der Auslass 212 jeweils fluiddicht an Ventile angeschlossen werden können.

### Bezugszeichenliste

- 1, 2: Adsorptionsvorrichtung
- 11, 21: Filter
- 111,211: Einlass
- 112,212: Auslass
- 113: Lumen
- 213: Zweite Kammer
- 214: Erste Kammer
- 12: Heizvorrichtung
- 121: Heizdraht
- 122: stabförmige Basis
- 123: Temperatursensor
- 13: Kühlvorrichtung
- 131: Austrittsöffnung
- 14: Gehäuse
- 141: Innenwände
- 142: Außenwand
- 143: Strömungskanäle
- 144: Verbindungsmittel
- 25: Hohlraum
- x: Längsachse

## Patentansprüche

1. Adsorptionsvorrichtung (1, 2) zur Adsorption von CO₂ für ein Elementaranalysegerät, wobei die Adsorptionsvorrichtung (1, 2)
einen Filter (11, 21) mit einem Einlass (111, 211) für ein Fluid, einem Auslass (112, 212) für das Fluid und einem adsorbierenden Material, das von dem Fluid durchströmt werden kann, und
eine Heizvorrichtung (12) zum Erwärmen des adsorbierenden Materials, umfasst,
**dadurch gekennzeichnet, dass**
sich die Heizvorrichtung (12) entlang einer Längsachse (x) erstreckt und
der Filter (11, 21) koaxial zu der Längsachse (x) angeordnet ist und die Heizvorrichtung (12) zumindest teilweise radial umschließt.

2. Adsorptionsvorrichtung (1) nach Anspruch 1, **dadurch gekennzeichnet, dass** der Filter (11) entlang der Längsrichtung spiralförmig um die Heizvorrichtung (12) herum angeordnet ist.

3. Adsorptionsvorrichtung (1) nach Anspruch 2, **dadurch gekennzeichnet, dass** der Einlass (111) und der Auslass (112) in Bezug auf die Längsachse (x) an entgegensetzen Seiten des Filters (11) angeordnet sind

4. Adsorptionsvorrichtung (2) nach Anspruch 1, **dadurch gekennzeichnet, dass** der Filter (21) eine erste Kammer (214) umfasst, wobei das adsorbierende Material in der ersten Kammer angeordnet ist, die erste Kammer (214) einen Hohlraum (25) umgibt, der sich entlang der Längsachse (x) erstreckt, und die Heizvorrichtung in dem Hohlraum (25) angeordnet ist.

5. Adsorptionsvorrichtung (2) nach Anspruch 4, **dadurch gekennzeichnet, dass** der Filter (21) zusätzlich eine zweite Kammer (213) umfasst, die fluidisch mit der ersten Kammer (214) verbunden ist, den Hohlraum (25) umgibt und zwischen der ersten Kammer (214) und dem Hohlraum (25) angeordnet ist, wobei das adsorbierende Material in der ersten Kammer (213) und/oder der zweiten Kammer (214) angeordnet ist.

6. Adsorptionsvorrichtung (1, 2) nach einem der Ansprüche 1 bis 5, **dadurch gekennzeichnet, dass** die Adsorptionsvorrichtung (1, 2) zusätzlich eine Kühlvorrichtung (13) zum Kühlen des adsorbierenden Materials umfasst.

7. Adsorptionsvorrichtung (1, 2) nach Anspruch 6, **dadurch gekennzeichnet, dass** die Kühlvorrichtung (13) durch einen Ventilator gebildet wird.

8. Adsorptionsvorrichtung (1, 2) nach einem der Ansprüche 1 bis 7, **dadurch gekennzeichnet, dass** die Heizvorrichtung (12) durch einen elektrischen Heizdraht (121) gebildet wird, der spiralförmig um eine stabförmige Basis (122) angeordnet ist.

9. Adsorptionsvorrichtung (1, 2) nach Anspruch 8, **dadurch gekennzeichnet, dass** die stabförmige Basis (122) einen Temperatursensor (123) umfasst.

10. Adsorptionsvorrichtung (1, 2) nach einem der Ansprüche 1 bis 9, **dadurch gekennzeichnet, dass** die Adsorptionsvorrichtung (1, 2) ein erstes Ventil aufweist, das mit dem Einlass (111, 211) verbunden ist und mit dem ein erstes und ein zweites Fluid wechselweise in den Filter (11, 21) geleitet werden können.

11. Elementaranalysegerät umfassend einen Verbrennungsreaktor zum Verbrennen einer Probe, einen optionalen Reduktionsreaktor, einen optionalen Wasserabscheider und einen Detektor,
**dadurch gekennzeichnet, dass**
das Elementaranalysegerät eine Adsorptionsvorrichtung (1, 2) zur Adsorption von CO₂ gemäß einem der Ansprüche 1 bis 10 umfasst,
und das Elementaranalysegerät eine Ventilsteuerung umfasst, mit der abwechselnd ein Analysefluid aus dem Verbrennungsreaktor durch die Adsorptionsvorrichtung (1, 2) zur Adsorption von CO₂ und zum Detektor bzw. ein Spülfluid durch die Adsorptionsvorrichtung (1,2) zur Adsorption von CO₂ geleitet werden kann.

12. Elementaranalysegerät nach Anspruch 11, **dadurch gekennzeichnet, dass** das Spülfluid ebenfalls durch den Detektor oder durch einen separaten Detektor zur Detektion von CO₂ bzw. Kohlenstoff in dem Spülfluid geleitet werden kann.

13. Elementaranalysegerät nach Anspruch 11 oder 12, **dadurch gekennzeichnet, dass** das Elementaranalysegerät mindestens zwei Adsorptionsvorrichtungen (1, 2) zur Adsorption von CO₂ umfasst und die Ventilsteuerung so konfiguriert ist, dass das Analysefluid parallel über zwei oder mehr Adsorptionsvorrichtungen geleitet werden kann.

14. Elementaranalysegerät nach einem der Ansprüche 11 bis 13, **dadurch gekennzeichnet, dass** das Elementaranalysegerät mindestens zwei Adsorptionsvorrichtungen (1, 2) zur Adsorption von CO₂ umfasst und die Ventilsteuerung so konfiguriert ist, dass das Analysefluid gleichartiger Proben über dieselbe Adsorptionsvorrichtungen geleitet werden kann.

15. Verfahren zum Entfernen von CO₂ aus einem Fluidstrom, umfassend die Schritte:
Bereitstellen einer Adsorptionsvorrichtung (1, 2) zur Adsorption von CO₂ gemäß einem der Ansprüche 1 bis 10;
Durchleiten eines CO₂-haltigen Fluidstroms durch die Adsorptionsvorrichtung (1, 2), so dass CO₂ aus dem Fluidstrom durch das adsorbierende Material adsorbiert wird;
Stoppen des CO₂-haltigen Fluidstroms;
Erwärmen des adsorbierenden Materials mittels der Heizvorrichtung (12) und Durchleiten eines Spülfluidstroms durch die Adsorptionsvorrichtung, so dass adsorbiertes CO₂ aus dem adsorbierenden Material wieder ausgespült wird;
Stoppen des Spülfluidstroms.

## Geänderte Patentansprüche

### Geänderte Patentansprüche gemäss Regel 137(2) EPÜ.

1. Adsorptionsvorrichtung (1) zur Adsorption von CO₂ für ein Elementaranalysegerät, wobei die Adsorptionsvorrichtung (1)
einen Filter (11) mit einem Einlass (111) für ein Fluid, einem Auslass (112) für das Fluid und einem adsorbierenden Material, das von dem Fluid durchströmt werden kann, und
eine Heizvorrichtung (12) zum Erwärmen des adsorbierenden Materials,
umfasst,
**dadurch gekennzeichnet, dass**
sich die Heizvorrichtung (12) entlang einer Längsachse (x) erstreckt,
der Filter (11) koaxial zu der Längsachse (x) angeordnet ist und
der Filter (11) entlang der der Längsrichtung spiralförmig um die Heizvorrichtung (12) herum angeordnet ist.

2. Adsorptionsvorrichtung (1) nach Anspruch 1, **dadurch gekennzeichnet, dass** der Einlass (111) und der Auslass (112) in Bezug auf die Längsachse (x) an entgegensetzen Seiten des Filters (11) angeordnet sind

3. Adsorptionsvorrichtung (1) nach einem der Ansprüche 1 und 2, **dadurch gekennzeichnet, dass** die Adsorptionsvorrichtung (1) zusätzlich eine Kühlvorrichtung (13) zum Kühlen des adsorbierenden Materials umfasst.

4. Adsorptionsvorrichtung (1) nach Anspruch 3, **dadurch gekennzeichnet, dass** die Kühlvorrichtung (13) durch einen Ventilator gebildet wird.

5. Adsorptionsvorrichtung (1) nach einem der Ansprüche 1 bis 4, **dadurch gekennzeichnet, dass** die Heizvorrichtung (12) durch einen elektrischen Heizdraht (121) gebildet wird, der spiralförmig um eine stabförmige Basis (122) angeordnet ist.

6. Adsorptionsvorrichtung (1) nach Anspruch 5, **dadurch gekennzeichnet, dass** die stabförmige Basis (122) einen Temperatursensor (123) umfasst.

7. Adsorptionsvorrichtung (1) nach einem der Ansprüche 1 bis 7, **dadurch gekennzeichnet, dass** die Adsorptionsvorrichtung (1) ein erstes Ventil aufweist, das mit dem Einlass (111) verbunden ist und mit dem ein erstes und ein zweites Fluid wechselweise in den Filter (11) geleitet werden können.

8. Elementaranalysegerät umfassend einen Verbrennungsreaktor zum Verbrennen einer Probe, einen optionalen Reduktionsreaktor, einen optionalen Wasserabscheider und einen Detektor,
**dadurch gekennzeichnet, dass**
das Elementaranalysegerät eine Adsorptionsvorrichtung (1) zur Adsorption von CO₂ gemäß einem der Ansprüche 1 bis 7 umfasst,
und das Elementaranalysegerät eine Ventilsteuerung umfasst, mit der abwechselnd ein Analysefluid aus dem Verbrennungsreaktor durch die Adsorptionsvorrichtung (1) zur Adsorption von CO₂ und zum Detektor bzw. ein Spülfluid durch die Adsorptionsvorrichtung (1) zur Adsorption von CO₂ geleitet werden kann.

9. Elementaranalysegerät nach Anspruch 8, **dadurch gekennzeichnet, dass** das Spülfluid ebenfalls durch den Detektor oder durch einen separaten Detektor zur Detektion von CO₂ bzw. Kohlenstoff in dem Spülfluid geleitet werden kann.

10. Elementaranalysegerät nach Anspruch 8 oder 9, **dadurch gekennzeichnet, dass** das Elementaranalysegerät mindestens zwei Adsorptionsvorrichtungen (1) zur Adsorption von CO₂ umfasst und die Ventilsteuerung so konfiguriert ist, dass das Analysefluid parallel über zwei oder mehr Adsorptionsvorrichtungen geleitet werden kann.

11. Verfahren zum Entfernen von CO₂ aus einem Fluidstrom, umfassend die Schritte:
Bereitstellen einer Adsorptionsvorrichtung (1) zur Adsorption von CO₂ gemäß einem der Ansprüche 1 bis 7;
Durchleiten eines CC₂-haltigen Fluidstroms durch die Adsorptionsvorrichtung (1), so dass CO₂ aus dem Fluidstrom durch das adsorbierende Material adsorbiert wird;
Stoppen des CC₂-haltigen Fluidstroms;
Erwärmen des adsorbierenden Materials mittels der Heizvorrichtung (12) und Durchleiten eines Spülfluidstroms durch die Adsorptionsvorrichtung, so dass adsorbiertes CO₂ aus dem adsorbierenden Material wieder ausgespült wird;
Stoppen des Spülfluidstroms.
